# FASCICULE DE BREVET EUROPEEN

(11) **EP 2 189 817 B1**
(45) Date de publication et mention de la délivrance du brevet: **10.10.2012**
(21) Numéro de dépôt: 09176999.2
(22) Date de dépôt: 25.11.2009
(51) Int. Cl.: G01V 1/22

(54) **Système d'acquisition de données sismiques comprenant des modules associés à des boîtiers reliés à des capteurs, les modules étant autonomes en alimentation, synchronisation et mémorisation**
System zur Erfassung seismischer Daten, das Module umfasst, die mit Gehäusen verbunden sind, die wiederum mit Sensoren verbunden sind, wobei die Module eine autonome Stromversorgung, Synchronisierung und Speicherung haben
System for acquiring seismic data including modules associated with boxes connected to sensors, the modules having independent power supply, synchronisation and memorisation

(30) Priorité: 25.11.2008 FR 0806600
(43) Date de publication de la demande: 26.05.2010
(73) Titulaire: Sercel, 44470 Carquefou (FR)
(72) Inventeur: Boucard, Daniel, 44470 Thouare sur Loire (FR)
(74) Mandataire: Larcher, Dominique

(56) Documents cités:
- DE-A1- 19 519 164
- US-A- 5 724 241
- US-A1- 2003 016 587
- US-A1- 2005 114 033

## Description

Le domaine de l'invention est celui de l'acquisition de données sismiques. Plus précisément, l'invention concerne les systèmes d'acquisition de données sismiques comprenant un réseau câblé relié à une unité centrale, par exemple embarquée sur un véhicule.

L'invention concerne en particulier l'industrie de la prospection pétrolière par méthode sismique, mais peut s'appliquer à tout domaine mettant en oeuvre un réseau d'acquisition de données sismiques. Toutefois, une application particulière de l'invention concerne les systèmes d'acquisition de données sismiques terrestres de surface.

Dans le domaine de l'invention, les opérations d'acquisition, sur le terrain, de données sismiques, mettent classiquement en oeuvre des réseaux de boîtiers électroniques auxquels sont raccordés des capteurs de mouvement du sol.

Les capteurs de ce type, désignés généralement par le terme de "géophones", sont généralement interconnectés en groupes de capteurs par des câbles pour constituer des grappes appelées « bretelles ». Une ou plusieurs de ces bretelles sont connectées auxdits boîtiers électroniques. Les boîtiers électroniques, interconnectés entre eux par un réseau numérique filaire, assurent la conversion analogique-numérique du signal des groupes de capteurs et transmettent ces données au camion enregistreur via ledit réseau numérique, une unité centrale de traitement des données étant embarquée sur le camion.

De nouveaux systèmes ont été mis récemment sur le marché dans lesquels les capteurs sont intégrés au boîtier électronique de conversion, ce qui a pour effet de supprimer les bretelles de géophones. Dans ce cas, les capteurs sont des accéléromètres.

Pour recueillir les données géophysiques, on active une ou plusieurs sources sismiques en contact avec le sol pour propager des trains d'ondes sismiques omnidirectionnelles. Les sources peuvent être entre autres constituées d'explosifs, de chutes de poids, de vibrateurs ou encore de canons à air en milieu marin.

Les trains d'ondes réfléchis par les couches du sous-sol sont détectés par les capteurs, qui génèrent un signal analogique caractérisant la réflexion des ondes sur les interfaces géologiques du sous-sol.

Comme indiqué précédemment, l'invention s'applique en particulier aux systèmes d'acquisition de données sismiques mettant en oeuvre un réseau câblé.

Dans ce type de réseau, les données sont classiquement envoyées du boîtier numérique vers l'unité centrale en passant par des modules électroniques intermédiaires.

Ces modules électroniques intermédiaires assurent différentes fonctions, parmi lesquelles :
- l'alimentation des boîtiers par l'intermédiaire de batteries ;
- la synchronisation des boîtiers ;
- le traitement du signal et l'interface avec le réseau numérique (transfert des données vers l'unité centrale, envoi des commandes reçues de l'unité centrale vers les boîtiers).

Dans les systèmes câblés actuels, l'unité centrale envoie un message de synchronisation à l'ensemble du réseau, ce message étant répété par les modules électroniques jusqu'aux boîtiers.

Par exemple, l'unité centrale peut contenir une horloge de haute précision (tel qu'un oscillateur à quartz), les modules et boîtiers pouvant être asservis en fréquence par une boucle à verrouillage de phase.

Le problème majeur de ce type de réseau est la sensibilité du système aux coupures de câbles.

Dans le cas d'un réseau câblé, une coupure de câble entraîne la perte de liaison avec les boîtiers situés après la coupure et donc la perte de tous les points de mesures sismiques correspondants à ces boîtiers.

En effet, les boîtiers et modules électroniques sont conçus pour assurer uniquement des fonctions de traitement du signal. En d'autres termes, les boîtiers et modules électroniques renvoient, au fur et à mesure, les données sismiques à l'unité centrale.

Une coupure de câble entraîne donc la perte irrémédiable des données sismiques correspondantes aux capteurs du tronçon de réseau isolé par la coupure.

Ces coupures peuvent avoir différentes origines :
- passages d'animaux (rongeurs, crocodiles, ruminants ...) ;
- actes de vandalisme ;
- passage de roues de véhicules ;
- ...

On comprend qu'une coupure du câble entraîne également une perte de la synchronisation des modules sur l'unité centrale ; les signaux sismiques ne pouvant être horodatés sont donc inutiles pour l'utilisateur final.

De plus, une campagne d'acquisition de données sismiques se déroule de telle sorte que les données soient recueillies pour tous les points du réseau déployé. Si des données ne parviennent pas à l'unité centrale pour certains points, les données recueillies pour les autres points procurent une « image sismique » de moins bonne qualité. Il en résulte qu'une coupure de câble tendant à isoler seulement certains points du réseau impacte le déroulement de la campagne d'acquisition sur l'ensemble du réseau, en provoquant éventuellement son arrêt.

Aussi, quand une coupure de câble intervient, on cherche en pratique à détecter et localiser le plus rapidement possible la coupure pour pouvoir y remédier. Ceci n'est pas toujours aisé en fonction des terrains sur lesquels le réseau est déployé (certaines campagnes pouvant se dérouler en régions montagneuses, en forêt tropicale...).

Concernant l'alimentation, on note qu'il est connu d'alimenter les boîtiers de manière unidirectionnelle ou bidirectionnelle par l'intermédiaire des modules.

L'avantage d'alimenter les boîtiers de manière unidirectionnelle est sa simplicité de mise en oeuvre : la tension se propage depuis l'unité centrale vers les modules puis les boîtiers, puis les modules suivants, etc ... L'inconvénient de cette implémentation est qu'une coupure câble implique un arrêt d'alimentation des boîtiers situés après la coupure jusqu'au module suivant.

Une alimentation bidirectionnelle permet en revanche une redondance d'alimentation : une panne d'alimentation dans un sens peut être palliée par une continuité d'alimentation provenant du module voisin.

Pour contourner le problème des coupures de câble et ses conséquences, il a été proposé d'organiser le réseau d'acquisition en lignes d'acquisition reliées à l'unité centrale par une ligne de communication principale (câblée) mais aussi reliées entre elles par des moyens de communication secondaires (câblés également) constituant une sorte de maillage formant des chemins alternatifs en cas de coupure de câbles. Cette solution ne permet cependant pas de remédier à toutes les situations de coupure de câble et tend à augmenter considérablement les temps et coûts d'installation du réseau.

Il a également été proposé par l'art antérieur de remplacer le réseau filaire d'interconnexion des boîtiers par un réseau radio de sorte que le système final est un réseau de capteurs sans aucun fil de raccordement.

Toutefois, cette solution s'avère techniquement et économiquement très dissuasive à mettre en oeuvre du fait des débits très importants de données à traiter, nécessitant des équipements appropriés complexes et très onéreux.

En outre, certains terrains ne se prêtent pas à une bonne communication radio, ce qui rend impossible la mise en oeuvre d'une telle solution.

L'invention a notamment pour objectif de pallier les inconvénients de l'art antérieur.

Plus précisément, l'invention a pour objectif de proposer un système d'acquisition de données sismiques comprenant un réseau câblé relié à une unité centrale qui reste opérationnel en cas de coupure de câble.

L'invention a également pour objectif de fournir un tel système qui permet d'opérer aisément, à partir de l'unité centrale, un contrôle des tronçons isolés par une coupure de câble.

Ces objectifs, ainsi que d'autres qui apparaîtront par la suite sont atteints à l'aide d'un système d'acquisition de données sismiques du type comprenant :
- une unité centrale ;
- un réseau câblé relié à ladite unité centrale comprenant une pluralité de lignes d'acquisition comprenant chacune :
   - des boîtiers électroniques montés en série le long d'un câble de télémétrie et associés chacun à au moins un capteur sismique, lesdits boîtiers assurant le traitement de signaux émis par ledit ou lesdits capteurs ;
   - des modules intermédiaires montés en série le long dudit câble de télémétrie et associés chacun à au moins un desdits boîtiers électroniques, chaque module intermédiaire assurant une alimentation électrique et une synchronisation dudit ou desdits boîtiers électroniques auxquels il est associé.

Selon l'invention, chaque boîtier électronique est couplé à au moins deux modules intermédiaires dont au moins un en amont et au moins un en aval dudit boîtier électronique le long dudit câble de télémétrie, chaque module intermédiaire comprenant :
- des moyens de synchronisation autonomes indépendants de ladite unité centrale ;
- des moyens d'alimentation électrique autonomes et bidirectionnels de façon à alimenter au moins un boîtier en amont dudit module intermédiaire et/ou au moins un boîtier en aval dudit module intermédiaire ;
- des moyens de mémorisation desdits signaux traités par lesdits boîtiers électroniques, lesdits moyens de mémorisation étant bidirectionnels de façon à mémoriser des signaux d'au moins un boîtier en amont dudit module intermédiaire et/ou d'au moins un boîtier en aval dudit module intermédiaire ou l'autre desdits deux modules.

Ainsi, grâce à l'invention, le réseau d'acquisition de données reste opérationnel en cas de coupure de câble.

En effet, lors d'une coupure de câble, le fonctionnement du tronçon de câble isolé de l'unité centrale poursuit son fonctionnement grâce à :
- la synchronisation opérée par les modules isolés, qui est autonome et indépendante de l'unité centrale ;
- l'alimentation électrique des boîtiers fournie par chacun des modules ;
- un stockage local, au niveau de chacun des modules, des données sismiques.

Par ailleurs, dans une situation normale de fonctionnement, les boîtiers sont associés par défaut, le long du câble de télémétrie, à un module déterminé, voisin du boîtier (en particulier en ce qui concerne la mémorisation des données et la synchronisation) : le module (n - 1) est associé au(x) boîtier(s) (n - 1), le module (n) est associé au(x) boîtier(s) (n), le module (n + 1) est associé au(x) boîtier(s) (n + 1)...

Or, en cas de coupure de câble, un boîtier n peut être isolé du module n associé.

L'invention permet également de pallier cette situation : les moyens d'alimentation bidirectionnels et les moyens de mémorisation bidirectionnels de chacun des modules permettent de relier le(s) boîtier(s) (n) (isolé(s) de son(leur) module (n)) au module (n + 1), ou au module (n - 1) en fonction de l'endroit de la coupure.

Préférentiellement, lesdits moyens de synchronisation sont bidirectionnels de façon à synchroniser au moins un boîtier en amont dudit module intermédiaire et/ou au moins un boîtier en aval dudit module intermédiaire.

Avantageusement, chaque boîtier comprend des moyens de détection d'une liaison avec un module intermédiaire placé en amont ou en aval dudit boîtier. Dans ce cas, lesdits moyens de détection sont préférentiellement associés aux moyens de mémorisation de deux modules intermédiaires.

Le ou les boîtiers d'un tronçon isolé peuvent ainsi être mis automatiquement en relation avec un autre module que celui auquel ils sont associés par défaut, ou maintenus en relation avec le module auquel ils sont associés par défaut, ceci en fonction de l'endroit de la coupure par rapport aux modules et boîtiers concernés.

Préférentiellement, lesdits moyens de synchronisation comprennent un système de positionnement global par satellite intégré à chaque module intermédiaire.

Selon une solution avantageuse, lesdits moyens de synchronisation desdits modules sont paramétrés pour pouvoir communiquer entre eux.

De cette façon, si le GPS des moyens de synchronisation d'un module est défectueux, ou si le GPS des moyens de synchronisation d'un module perd la liaison avec le satellite, le module correspondant peut se synchroniser par l'intermédiaire des moyens de synchronisation d'un module voisin.

Avantageusement, le système comprend des moyens de communication secondaires entre lesdits modules et ladite unité centrale. Dans ce cas, lesdits moyens de communication secondaires sont des moyens radio.

En présence de moyens de communication secondaires, lesdits modules comprennent avantageusement :
- des moyens d'indication du niveau d'autonomie restant des moyens d'alimentation ;
- des moyens d'indication de la capacité de mémorisation disponible.

Ainsi, un opérateur peut obtenir, à partir de l'unité centrale et par l'intermédiaire de la communication radio avec les modules (dans la mesure où le terrain le permet), des données sur l'état de fonctionnement des modules : niveau de batterie restant, mémoire disponible, l'opérateur pouvant procéder également à d'autres test fonctionnels sur les modules, que ceux-ci soient isolés ou pas du réseau câblé.

Selon une autre caractéristique avantageuse, lesdits modules intermédiaires comprennent des moyens de connexion à une unité portable indépendante du réseau câblé.

Les données sismiques stockées localement par les modules peuvent alors être récupérées selon deux modes :
- soit par l'unité centrale, après rétablissement de la communication (remplacement ou réparation du câble sectionné) ;
- soit par un opérateur muni d'une unité portable, qui se déplace de module en module pour rapatrier dans l'unité portable les données en vue de les transmettre ensuite à l'unité centrale.

Selon encore une autre solution avantageuse, lesdits modules comprennent des moyens d'exécution d'un algorithme de mise en/hors service desdits moyens de synchronisation et/ou desdits moyens d'alimentation électrique et/ou desdits moyens de mémorisation.

On note que, dans la pratique, les modules intermédiaires fonctionnent de façon passive, ceci que ce soit en mode de fonctionnement normal ou en cas de coupure : par défaut, ils alimentent, mémorisent et synchronisent en permanence de façon bidirectionnelle. Il en résulte que les boîtiers sont eux-mêmes alimentés et synchronisés par défaut de façon bidirectionnelle (par deux modules, l'un en amont, l'autre en aval d'un boîtier considéré) et envoient les données à mémoriser au module en amont ou au module en aval selon la disponibilité dudit module ; et que, en cas de coupure dans une direction, un boîtier n'est plus associé qu'à un seul module, ceci du seul fait de la coupure de la liaison câblée.

Par ailleurs, l'algorithme de mise en/hors service des moyens de synchronisation, d'alimentation et de mémorisation est utilisé pour stopper la campagne le soir par exemple et pour le remettre en route le matin suivant.

Cet algorithme est déclenché par les modules eux-mêmes et permet d'économiser les moyens d'alimentation et de mémorisation.

Selon un mode de réalisation particulier, lesdits modules sont intégrés avec les boîtiers.

On obtient ainsi une intégration optimisée des fonctions de l'invention au niveau des boîtiers, facilitant notamment le stockage et le déploiement du réseau câblé.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 illustre schématiquement un système d'acquisition de données sismiques selon l'invention, en mode d'acquisition normal ;
- la figure 2 illustre schématiquement un système d'acquisition de données sismiques selon l'invention, dans lequel un tronçon de réseau est isolé par une coupure de câble ;
- la figure 3 illustre un mode de réalisation particulier de l'invention selon lequel les modules intègrent des moyens de communication secondaires ;
- la figure 4 illustre un autre mode de réalisation particulier de l'invention selon lequel les modules sont intégrés dans les boîtiers électroniques.

Tel qu'indiqué précédemment, le principe de l'invention réside dans le fait d'associer, dans un système d'acquisition de données sismiques comprenant un réseau câblé relié à une unité centrale, chaque boîtier électronique à deux modules intermédiaires situés de part et d'autre du boitier le long du câble, et à intégrer dans les modules des moyens de synchronisation autonomes et indépendants de l'unité centrale, des moyens d'alimentation autonomes et bidirectionnels et des moyens de mémorisation bidirectionnels des signaux traités par les boîtiers, chaque module intermédiaire pouvant, en fonction de l'état de la liaison câblée, mettre ses moyens de synchronisation, d'alimentation et de mémorisation au service d'un boîtier en aval et/ou en amont par rapport au module considéré.

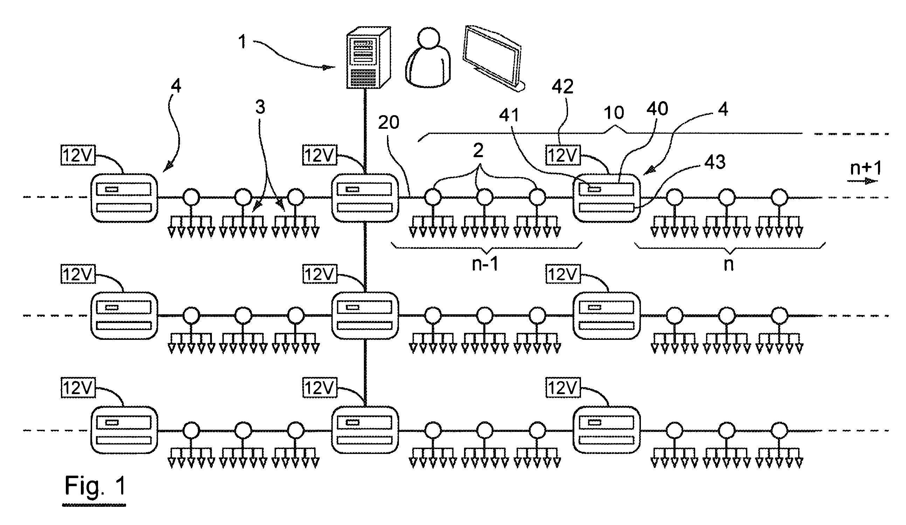

En référence à la figure 1, un système d'acquisition de données sismiques selon l'invention comprend :
- une unité centrale 1 ;
- un réseau câblé relié à ladite unité centrale 1 comprenant une pluralité de lignes 10 d'acquisition.

Chaque ligne d'acquisition 10 comprend :
- des boîtiers électroniques 2 montés en série le long d'un câble de télémétrie 20 et associés chacun à une bretelle 3 de capteurs sismiques (en l'occurrence des géophones) ;
- des modules intermédiaires 4 montés en série le long du câble de télémétrie 20 et couplés chacun à un ou plusieurs boîtiers électroniques 2 (à trois boîtiers électroniques selon le présent mode de réalisation ).

Classiquement, les boîtiers 2 assurent le traitement de signaux émis par les capteurs des bretelles 3.

On note que l'invention s'applique tant aux systèmes mono-trace (dans lesquels chaque boîtier est associé à une seule grappe de géophones ou un seul accéléromètre) qu'aux systèmes multi-traces (dans lesquels chaque boîtier est associé à plusieurs grappes de géophones ou plusieurs accéléromètres).

Les modules intermédiaires comprennent chacun :
- des moyens de synchronisation 40 ;
- des moyens d'alimentation électrique 42, fournissant par exemple une tension 12 V.

Les modules intermédiaires assurent également des fonctions, non représentées sur la figure 1, de traitement du signal et d'interface avec le réseau numérique (transfert des données vers l'unité centrale, envoi des commandes reçues de l'unité centrale vers les boîtiers).

Dans une situation normale de fonctionnement, les boîtiers sont associés par défaut, le long du câble de télémétrie, à un module déterminé, voisin du boîtier : le module (n - 1) est associé au(x) boîtier(s) (n - 1), le module (n) est associé au(x) boîtier(s) (n), le module (n + 1) est associé au(x) boîtier(s) (n + 1)...

Toujours dans une situation normale de fonctionnement, l'alimentation électrique des boîtiers électroniques est fournie par chacun des modules intermédiaires, et les modules intermédiaires n-1, n et n+1 assurent la synchronisation respectivement dudit ou desdits boîtiers électroniques n-1, n et n+1.

On note que, en pratique, chaque boîtier est alimenté en permanence en électricité par deux modules intermédiaires (le module en amont et le module en aval du boîtier).

Par ailleurs, la synchronisation de chaque boîtier peut elle aussi être doublonnée en fonctionnement normal, en étant assurée en permanence par le module en amont et par le module en aval du boîtier.

Selon le principe de l'invention, les moyens de synchronisation, d'alimentation et de mémorisation de chaque module intermédiaire peuvent être utilisés pour un ou plusieurs boîtiers électroniques placés directement en aval (ou en amont) dudit module mais aussi pour un ou plusieurs boîtiers électroniques placés directement en amont (ou respectivement directement en aval) dudit module.

Pour ce faire, les moyens d'alimentation électrique de chaque module intermédiaire sont autonomes et bidirectionnels de façon à alimenter soit les boîtiers électroniques placés directement en amont dudit module, soit les boîtiers électroniques placés directement en aval dudit module, soit les deux.

De plus les moyens de synchronisation 40 de chaque module sont autonomes et indépendants de l'unité centrale, ceci permettant de continuer à assurer la synchronisation de l'ensemble des boîtiers électroniques, par l'intermédiaire des modules, même en cas de coupure de câble.

Selon le présent mode de réalisation, les moyens de synchronisation comprennent un système de positionnement global par satellite 41 (GPS) intégré à chaque module intermédiaire, lesdits modules recevant un signal de synchronisation procuré à l'aide de leur propre GPS ou de celui d'un module voisin (la synchronisation des boîtiers électroniques n pouvant ainsi être assurée par les moyens de synchronisation du module intermédiaire n-1 (ou n+1) en cas de défaillance du GPS du module n, ceci même en l'absence de coupure de câble).

Selon le principe de l'invention, chaque module intermédiaire comprend en outre des moyens de mémorisation 43 des signaux traités par lesdits boîtiers électroniques.

Les moyens de mémorisation 43 de chaque module sont associés par défaut à un ou plusieurs boîtiers électroniques placés en aval (ou en amont) dudit module, ces moyens de mémorisation pouvant assurer la mémorisation de signaux fournis par le ou les boîtiers électroniques voisins placés directement en amont (ou respectivement directement en aval) dudit module.

Pour ce faire, les moyens de mémorisation de chaque module intermédiaire sont bidirectionnels de façon à mémoriser les signaux fournis soit par les boîtiers électroniques placés directement en amont dudit module, soit par les boîtiers électroniques placés directement en aval dudit module. En d'autres termes, les moyens de mémorisation de chaque module sont reliés à au moins deux boîtiers électroniques dont au moins un en amont et/ou au moins un aval dudit module intermédiaire le long dudit câble de télémétrie.

Par ailleurs, chaque boîtier électronique comprend des moyens de détection d'une liaison avec un module intermédiaire placé en amont ou en aval dudit boîtier, ces moyens de détection étant associés aux moyens de mémorisation de deux modules intermédiaires (l'un directement en aval et l'autre directement en amont du boîtier correspondant).

Les moyens de détection comprennent des moyens d'exécution d'un dialogue entre le boîtier et les deux modules en amont et en aval du boîtier : le boîtier envoie des signaux aux deux modules qui renvoient chacun un signal par le câble au boîtier ; le retour de signal des modules se traduit par une détection de la liaison câblée avec le module correspondant. A l'inverse, l'absence de retour de signal d'un module indique une coupure de câble entre le boîtier et le module correspondant, le boîtier envoyant alors les données issues du ou des capteurs à l'autre module auquel il est encore relié par le câble (en particulier pour que les données soient mémorisées par les moyens de mémorisation du module encore relié).

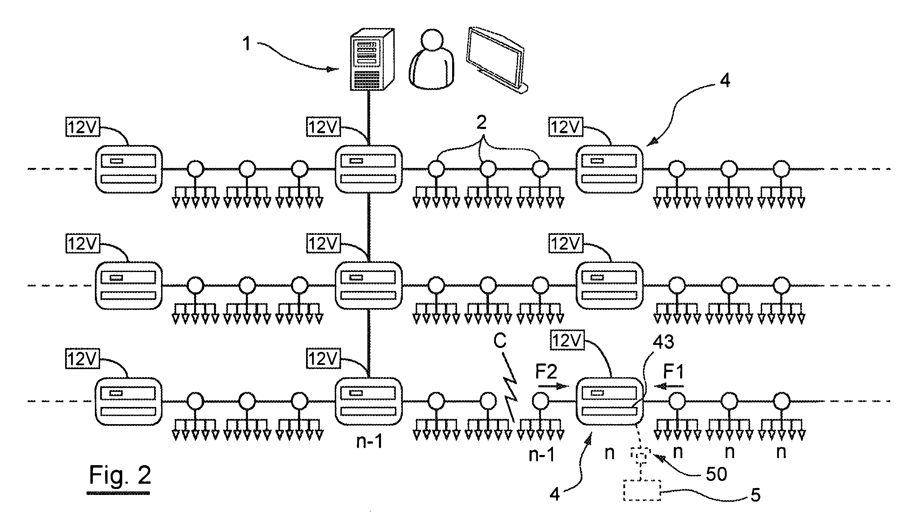

Ainsi, dans le cas d'une coupure C de câble positionnée entre deux boîtiers n-1 tel qu'illustré par la figure 2, l'un des boîtiers n-1 est isolé du module n-1 associé. Les moyens de détection associés au boîtier n-1 correspondant renvoient audit boîtier un signal indiquant qu'il n'est plus relié au module intermédiaire n-1, une liaison entre ledit boîtier n-1 "isolé" et le module intermédiaire n étant alors établie de telle sorte que :
- le module intermédiaire n assure l'alimentation électrique du boîtier n-1 "isolé", en plus d'assurer l'alimentation électrique des boîtiers n auxquels le module n est associé par défaut ;
- les signaux traités par le boîtier n-1 "isolé" sont mémorisés par les moyens de mémorisation 43 du module n tel que symbolisé par la flèche F2 (qui assure en plus la mémorisation des signaux traités par les boîtiers n tel que symbolisé par la flèche F1) ;
- le module intermédiaire n assure la synchronisation du boîtier n-1 "isolé", en plus d'assurer la synchronisation des boîtiers n auxquels le module n est associé par défaut.

De plus, les modules comprennent des moyens d'exécution d'un algorithme de mise en/hors service desdits moyens de synchronisation et/ou desdits moyens d'alimentation électrique et/ou desdits moyens de mémorisation.

Les modules intermédiaires exécutent automatiquement l'algorithme pour le déclenchement de la mise hors service (par exemple le soir) et le déclenchement de la mise en service (par exemple le matin), ceci par exemple à des heures prédéterminées.

Les moyens de synchronisation des modules étant autonomes et indépendants de l'unité centrale, ceux-ci agissent en permanence sur les boîtiers auxquels les modules sont associés par défaut. Selon la position de la coupure, les moyens de synchronisation d'un module assureront, ou pas, la synchronisation de boîtiers supplémentaires.

Le rapatriement vers l'unité centrale 1 des données mémorisées par les modules en aval d'une coupure C s'opère soit par l'intermédiaire du câble de télémétrie une fois celui-ci réparé ou changé, soit par l'intermédiaire d'une unité portable 5 portée par un opérateur et couplée (le couplage pouvant être de tout type, filaire ou sans fil, connu de l'homme du métier) aux modules (l'opérateur transportant l'unité portable tout le long de la portion de câble de télémétrie située en aval de la coupure) par l'intermédiaire de moyens de connexion 50.

Selon un autre aspect de l'invention, les modules comprennent :
- des moyens d'indication du niveau d'autonomie restant des moyens d'alimentation ;
- des moyens d'indication de la capacité de mémorisation disponible.

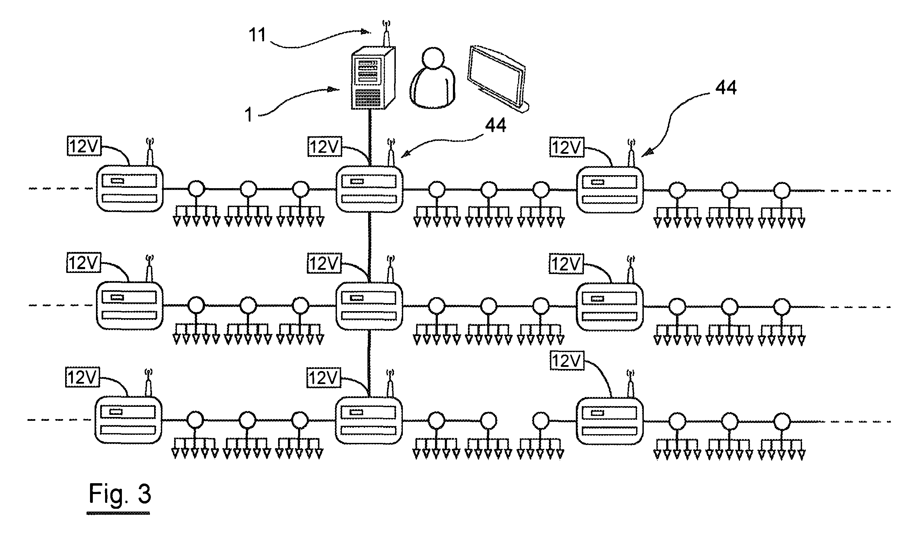

Les données correspondantes (niveau d'autonomie des moyens d'alimentation et capacité de mémorisation disponible) peuvent être transmises à l'unité centrale 1, soit selon une fréquence déterminée soit à la requête de l'unité centrale. Pour cela, en référence au mode de réalisation illustré par la figure 3, l'unité centrale comprend des moyens d'émission/réception radio 11 et les modules intermédiaires comprennent des moyens d'émission/réception radio 44, les moyens d'émission/réception radio de l'unité centrale et les moyens d'émission/réception radio des modules étant destinés à communiquer entre eux.

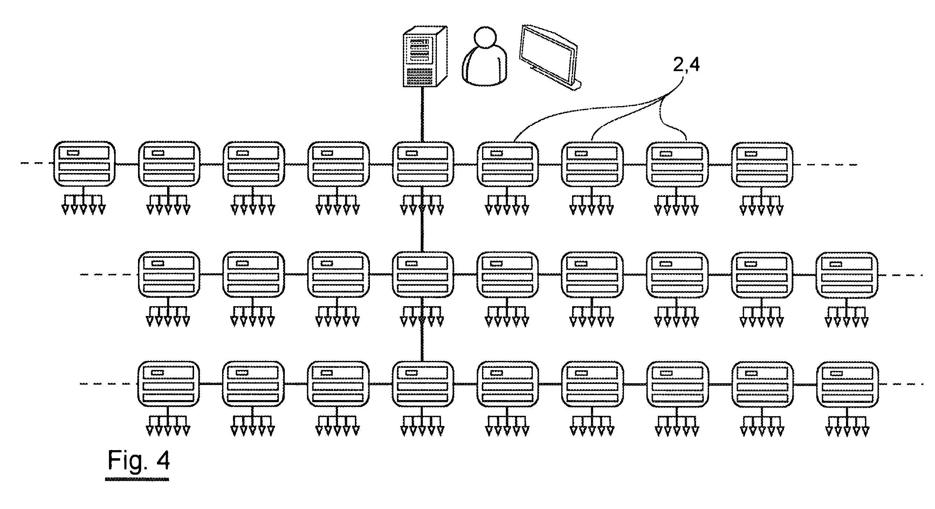

On note que, selon un mode de réalisation particulier illustré par la figure 4, un module intermédiaire tel que décrit précédemment est intégré avec chaque boîtier électronique, pour former un seul composant 2, 4.

Dans ce type de configuration on note que, les moyens d'alimentation peuvent également être intégrés directement dans les modules.

## Revendications

1. Système d'acquisition de données sismiques du type comprenant :
- une unité centrale ;
- un réseau câblé relié à ladite unité centrale comprenant une pluralité de lignes d'acquisition comprenant chacune :
- des boîtiers électroniques montés en série le long d'un câble de télémétrie et associés chacun à au moins un capteur sismique, lesdits boîtiers assurant le traitement de signaux émis par ledit ou lesdits capteurs ;
- des modules intermédiaires montés en série le long dudit câble de télémétrie et câblés chacun à au moins deux desdits boîtiers électroniques, chaque module intermédiaire assurant une alimentation électrique et une synchronisation dudit ou desdits boîtiers électroniques auxquels il est associé, et comprenant des moyens de synchronisation autonomes indépendants de ladite unité centrale ;
**caractérisé en ce que** chaque boîtier électronique est couplé à l'aide du câble à au moins deux modules intermédiaires dont au moins un en amont et au moins un en aval dudit boîtier électronique le long dudit câble de télémétrie, chaque module intermédiaire comprenant :
- des moyens d'alimentation électrique autonomes et bidirectionnels de façon à alimenter à travers ledit câble au moins un boîtier en amont dudit module intermédiaire et/ou au moins un boîtier en aval dudit module intermédiaire ;
- des moyens de mémorisation desdits signaux traités par lesdits boîtiers électroniques, lesdits moyens de mémorisation étant bidirectionnels de façon à mémoriser des signaux d'au moins un boîtier en amont dudit module intermédiaire et/ou d'au moins un boîtier en aval dudit module intermédiaire.

2. Système d'acquisition de données sismiques selon la revendication 1, **caractérisé en ce que** lesdits moyens de synchronisation sont bidirectionnels de façon à synchroniser au moins un boîtier en amont dudit module intermédiaire et au moins un boîtier en aval dudit module intermédiaire.

3. Système d'acquisition de données sismiques selon l'une des revendications 1 et 2, **caractérisé en ce que** chaque boîtier comprend des moyens de détection d'une liaison avec un module intermédiaire placé en amont ou en aval dudit boîtier.

4. Système d'acquisition de données sismiques selon la revendication 3, **caractérisé en ce que** lesdits moyens de détection sont couplés auxdits moyens d'alimentation électrique et aux moyens de mémorisation de deux modules intermédiaires.

5. Système d'acquisition de données sismiques selon l'une quelconque des revendications 1 à 4, **caractérisé en ce que** lesdits moyens de synchronisation comprennent un système de positionnement global par satellite intégré à chaque module intermédiaire.

6. Système d'acquisition de données sismiques selon l'une quelconque des revendications 1 à 5, **caractérisé en ce que** lesdits moyens de synchronisation desdits modules sont paramétrés pour pouvoir communiquer entre eux.

7. Système d'acquisition de données sismiques selon l'une quelconque des revendications 1 à 6, **caractérisé en ce qu'**il comprend des moyens de communication secondaires entre lesdits modules et ladite unité centrale.

8. Système d'acquisition de données sismiques selon la revendication 7, **caractérisé en ce que** lesdits moyens de communication secondaires sont des moyens radio.

9. Système d'acquisition de données sismiques selon l'une des revendications 7 et 8, **caractérisé en ce que** lesdits modules comprennent :
- des moyens d'indication du niveau d'autonomie restant des moyens d'alimentation ;
- des moyens d'indication de la capacité de mémorisation disponible.

10. Système d'acquisition de données sismiques selon l'une quelconque des revendications 1 à 9, **caractérisé en ce que** lesdits modules intermédiaires comprennent des moyens de connexion à une unité portable indépendante du réseau câblé.

11. Système d'acquisition de données sismiques selon l'une quelconque des revendications 1 à 10, **caractérisé en ce que** lesdits modules comprennent des moyens d'exécution d'un algorithme de mise en/hors service desdits moyens de synchronisation et/ou desdits moyens d'alimentation électrique et/ou desdits moyens de mémorisation.

## Claims

1. System for acquiring seismic data, of the type comprising:
- a central unit;
- a cabled network connected to the said central unit and comprising a plurality of acquisition lines each comprising:
• electronic units mounted in series along a telemetry cable and each associated with at least one seismic sensor, the said units ensuring processing of signals emitted by the said sensor or sensors;
• intermediate modules mounted in series along the said telemetry cable and each cabled to at least two of the said electronic units, each intermediate module ensuring an electric power supply and synchronisation of the said electronic unit or units with which it is associated and comprising autonomous synchronisation means independent of the said central unit;
**characterised in that** each electronic unit is coupled by means of the cable to at least two intermediate modules, at least one of which is upstream and at least one of which is downstream of the said electronic unit along the said telemetry cable, each intermediate module comprising:
- autonomous and bidirectional electric power supply means so as to power via the said cable at least one unit upstream of the said intermediate module and/or at least one unit downstream of the said intermediate module;
- means for storing the said signals processed by the said electronic units, the said storage means being bidirectional so as to store signals of at least one unit upstream of the said intermediate module and/or of at least one unit downstream of the said intermediate module.

2. System for acquiring seismic data according to Claim 1, **characterised in that** the said synchronisation means are bidirectional so as to synchronise at least one unit upstream of the said intermediate module and at least one unit downstream of the said intermediate module.

3. System for acquiring seismic data according to either one of Claims 1 and 2, **characterised in that** each unit comprises means for detecting a link with an intermediate module situated upstream or downstream of the said unit.

4. System for acquiring seismic data according to Claim 3, **characterised in that** the said detection means are coupled to the said electric power supply means and to the storage means of two intermediate modules.

5. System for acquiring seismic data according to any one of Claims 1 to 4, **characterised in that** the said synchronisation means comprise a satellite global positioning system incorporated in each intermediate module.

6. System for acquiring seismic data according to any one of Claims 1 to 5, **characterised in that** the said synchronisation means of the said modules are configured so as to be able to communicate with each other.

7. System for acquiring seismic data according to any one of Claims 1 to 6, **characterised in that** it comprises means for secondary communication between the said modules and the said central unit.

8. System for acquiring seismic data according to Claim 7, **characterised in that** the said secondary communication means are radio means.

9. System for acquiring seismic data according to either one of Claims 7 and 8, **characterised in that** the said modules comprise:
- means for indicating the remaining autonomy level of the power supply means;
- means for indicating the available storage capacity.

10. System for acquiring seismic data according to any one of Claims 1 to 9, **characterised in that** the said intermediate modules comprise means for connection to a portable unit which is independent of the cabled network.

11. System for acquiring seismic data according to any one of Claims 1 to 10, **characterised in that** the said modules comprise means for executing an algorithm for activating/deactivating the said synchronisation means and/or the said electric power supply means and/or the said storage means.

## Patentansprüche

1. System zur Erfassung seismischer Daten der Art, die Folgendes umfasst:
- eine Zentraleinheit;
- ein Kabelnetz, das mit der Zentraleinheit verbunden ist und mehrere Erfassungsleitungen umfasst, die jeweils Folgendes umfassen:
- Elektronikkästen, die entlang eines Telemetriekabels in Reihe geschaltet und jeweils mit mindestens einem seismischen Sensor in Verbindung stehen, wobei die Kästen die Verarbeitung von Signalen, die von dem oder den Sensoren ausgegeben wurden, sicherstellen;
- Zwischenmodule, die entlang des Telemetriekabels in Reihe geschaltet sind und jeweils mit mindestens zwei der Elektronikkästen verkabelt sind, wobei jedes Zwischenmodul eine Stromversorgung und eine Synchronisation des oder der Elektronikkästen, mit dem bzw. denen es in Verbindung steht, sicherstellt und autonome Synchronisationsmittel umfasst, die von der Zentraleinheit unabhängig sind;
**dadurch gekennzeichnet, dass** jeder Elektronikkasten mittels des Kabels an mindestens zwei Zwischenmodule gekoppelt ist, von denen mindestens eines dem Elektronikkasten entlang des Telemetriekabels vorgeschaltet und mindestens eines dem Elektronikkasten entlang des Telemetriekabels nachgeschaltet ist, wobei jedes Zwischenmodul Folgendes umfasst:
- autonome und bidirektionale Stromversorgungsmittel, um mindestens einen dem Zwischenmodul vorgeschalteten Kasten und/oder mindestens einen dem Zwischenmodul nachgeschalteten Kasten durch das Kabel mit Strom zu versorgen;
- Mittel zur Speicherung der von Elektronikkästen verarbeiteten Signale, wobei die Speichermittel bidirektional sind, um die Signale von mindestens einem dem Zwischenmodul vorgeschalteten Kasten und/oder mindestens einem dem Zwischenmodul nachgeschalteten Kasten zu speichern.

2. System zur Erfassung seismischer Daten nach Anspruch 1, **dadurch gekennzeichnet, dass** die Synchronisationsmittel bidirektional sind, um mindestens einen dem Zwischenmodul vorgeschalteten Kasten und mindestens einen dem Zwischenmodul nachgeschalteten Kasten zu synchronisieren.

3. System zur Erfassung seismischer Daten nach einem der Ansprüche 1 und 2, **dadurch gekennzeichnet, dass** jeder Kasten Mittel zur Erfassung einer Verbindung zwischen einem Zwischenmodul, das dem Kasten vorgeschaltet oder nachgeschaltet angeordnet ist, umfasst.

4. System zur Erfassung seismischer Daten nach Anspruch 3, **dadurch gekennzeichnet, dass** die Erfassungsmittel an die Stromversorgungsmittel und an die Speichermittel der zwei Zwischenmodule gekoppelt sind.

5. System zur Erfassung seismischer Daten nach einem der Ansprüche 1 bis 4, **dadurch gekennzeichnet, dass** die Synchronisationsmittel ein globales Positionierungssystem umfasst, das in jedes Zwischenmodul integriert ist.

6. System zur Erfassung seismischer Daten nach einem der Ansprüche 1 bis 5, **dadurch gekennzeichnet, dass** die Synchronisationsmittel der Module parametrisiert sind, um miteinander kommunizieren zu können.

7. System zur Erfassung seismischer Daten nach einem der Ansprüche 1 bis 6, **dadurch gekennzeichnet, dass** es sekundäre Kommunikationsmittel zwischen den Modulen und der Zentraleinheit umfasst.

8. System zur Erfassung seismischer Daten nach Anspruch 7, **dadurch gekennzeichnet, dass** die sekundären Kommunikationsmittel Funkmittel sind.

9. System zur Erfassung seismischer Daten nach einem der Ansprüche 7 und 8, **dadurch gekennzeichnet, dass** die Module Folgendes umfassen:
- Mittel zur Anzeige des restlichen Autonomieniveaus der Stromversorgungsmittel;
- Mittel zur Anzeige der verfügbaren Speicherkapazität.

10. System zur Erfassung seismischer Daten nach einem der Ansprüche 1 bis 9, **dadurch gekennzeichnet, dass** die Zwischenmodule Mittel zur Verbindung mit einer tragbaren Einheit umfassen, die von dem Kabelnetz unabhängig ist.

11. System zur Erfassung seismischer Daten nach einem der Ansprüche 1 bis 10, **dadurch gekennzeichnet, dass** die Module Mittel zur Ausführung eines Algorithmus zum An-/Abschalten der Synchronisationsmittel und/oder der Stromversorgungsmittel und/oder der Speichermittel umfassen.
